# EUROPÄISCHE PATENTSCHRIFT

(11) **EP 0 607 913 B1**
(45) Veröffentlichungstag und Bekanntmachung des Hinweises auf die Patenterteilung: **02.04.1997**
(21) Anmeldenummer: 94100618.1
(22) Anmeldetag: 18.01.1994
(51) Int. Cl.: B23Q 5/34, B27C 9/02, B27M 1/08

(54) **Vorrichtung zur Führung der Werkstücke bei einer automatischen Holzbearbeitungsmaschine**
Device for feeding workpieces in an automatic wood-working machine tool
Dispositif d'alimentation des pièces à usiner dans une machine automatique pour le travail du bois

(30) Priorität: 19.01.1993 DE 4301216
(43) Veröffentlichungstag der Anmeldung: 27.07.1994
(73) Patentinhaber: BALJER & ZEMBROD GmbH & Co., D-88361 Altshausen (DE)
(72) Erfinder: Geissler, Erwin, D-88273 Fronreute (DE); Müller, Christof, D-88326 Aulendorf (DE); Schuler, Reinhold, D-88361 Boms (DE); Würstle, Willi, D-88213 Ravensburg (DE)
(74) Vertreter: Patentanwälte Eisele, Otten & Roth

(56) Entgegenhaltungen:
- EP-A- 0 267 156
- BE-A- 1 001 463
- DE-A- 1 652 387
- DE-C- 3 838 422
- FR-A- 2 354 181

## Beschreibung

Die Erfindung betrifft eine Vorrichtung zur Führung der Werkstücke bei einer automatischen Holzbearbeitungsmaschine, insbesondere zur Bearbeitung von Kanthölzern für Bauzwecke, nach dem Gattungsbegriff des Anspruchs 1.

Eine Führungsvorrichtung dieser Art ist aus der europäischen Patentanmeldung 0 267 156 bekannt. Sie bildet einen wesentlichen Teil der in dieser Schrift beschriebenen Anlage zur spanabhebenden Bearbeitung, die auch als Abbundanlage oder Holzbearbeitungszentrum bezeichnet werden kann. Mit der Führungsvorrichtung wird das Werkstück je nach der Art der beabsichtigten Bearbeitung entweder festgehalten oder bei stillstehendem oder bewegtem Werkzeug geradlinig bewegt. Man spricht bei der bekannten CNC-gesteuerten Bearbeitungsanlage von fünf sogenannten Bewegungsachsen und eine davon wird von der Führungsvorrichtung gebildet.

Bei der bekannten Führungsvorrichtung sind vier Spannwagen vorgesehen. Sie laufen an wandbefestigten Schienen und haben eigene Antriebsmotoren, deren Ritzel mit einer gemeinsamen Zahnstange kämmen, die neben den Fahrschienen befestigt ist. Die Aufspannwagen können somit individuell verfahren, was es möglich macht, sie beliebig zu gruppieren und an im Hinblick auf das Bearbeitungsprogramm geeigneten Stellen eines langen Balkens anzusetzen. Während des Bearbeitungsvorgangs laufen die durch das aufgespannte Werkstück miteinander gekoppelten Wagen im Synchronismus. Es sind daher geeignete Servomotoren und eine aufwendige Steuereinrichtung erforderlich.

Der Erfindung liegt die Aufgabe zugrunde, bei uneingeschränkter individueller Verfahrbarkeit der Spannwagen deren gemeinsamen CNC-gesteuerten hochpräzisen Antrieb während der Bearbeitungsvorgänge mit geringerem technischen Aufwand sicherzustellen.

Diese Aufgabe wird ausgehend von einer Führungsvorrichtung der einleitend bezeichneten Art erfindungsgemäß durch die kennzeichnenden Merkmale des Anspruchs 1 gelöst. Hierbei ist nurmehr ein einziger CNC-gesteuerter Servomotor vorgesehen, der mittels einer der Umlenkrollen den endlosen Zugstrang antreibt. Einer der Spannwagen ist mit dem Zugstrang fest verbunden und zwar mit einem Trum des Zugstrangs, worunter einer der Zugstrangabschnitte zwischen den beiden Umlenkrollen verstanden wird. Die übrigen Spannwagen sind wahlweise in beliebigen Positionen mit demselben Trum des Zugstrangs verbindbar, und zwar mittels einer geeigneten Kuppelvorrichtung. Sind auch diese anderen Spannwagen am Zugstrang angekuppelt, so werden alle gemeinsam mittels des einen Servomotors, der auf den Zugstrang wirkt, bewegt. Bei dieser einfachen Ausführungsform ersetzt der Zugstrang die ansonsten erforderlichen CNC-gesteuerten Servomotoren für die anderen Spannwagen.

Vorteilhafterweise ist der Zugstrang eine Kette oder gemäß dem bevorzugten Ausführungsbeispiel ein Zahnriemen und die Kuppelvorrichtung umfaßt ein an dem betreffenden Spannwagen gelagerts und mit der Kette oder dem Zahnriemen kämmendes Zahnrad, das mittels eines Motors angetrieben werden kann. Diese Motoren können jedoch einfache polumschaltbare Elektromotoren sein, da sie nur für die Relativbewegung der Spannwagen bei abgenommenem Werkstück und außerhalb des Bearbeitungsvorgangs dienen. Infolge des Antriebs bewegt sich der Spannwagen an dem Zugstrang entlang.

Um die Führungsbahn fest verankern zu können und hinsichtlich der räumlichen Anordnung innerhalb einer Halle oder dgl. frei zu sein, wird weiter vorgeschlagen, daß die Führungsbahn auf freistehenden Stützen am Boden befestigt ist und die Spannwagen von beiden Seiten zugänglich sind.

Eine sinnvolle konstruktive Lösung besteht darin, daß die Führungsbahn aus zwei in einem Abstand vom Boden nebeneinander verlaufenden prismatischen Laufschienen besteht, an denen die Spannwagen mit freilaufenden Rollen geführt sind. Vorzugsweise sind dabei die Laufschienen an einer Hohlprofilschiene angeordnet, die als Tragelement wirkt und das andere Trum des Zugstrangs in der Hohlprofilschiene verläuft. Diese raumsparende kompakte Anordnung hat auch den Vorteil, daß das zurücklaufende Trum geschützt und dementsprechend die Unfallgefahr verringert ist.

Ein Ausführungsbeispiel der Erfindung wird nachfolgend anhand der Zeichnung erläutert. Im einzelnen zeigt
- Fig. 1: eine schematische Seitenansicht der Führungsvorrichtung eines Holzbearbeitungszentrums,
- Fig. 2: die Seitenansicht zweier Spannwagen mit einem von diesen getragenen Balken und einem entsprechenden Abschnitt der Führungsbahn,
- Fig. 3: die Draufsicht der beiden Spannwagen nach Fig. 2 ohne den Balken,
- Fig. 4: eine Ansicht der Anordnung nach Fig. 2 in Schienenlängsrichtung gesehen,
- Fig. 5: einen Querschnitt eines Spannwagens nach den vorhergehenden Figuren in größerem Maßstab und
- Fig. 6: einen Längsschnitt des Spannwagens gemäß Fig. 5.

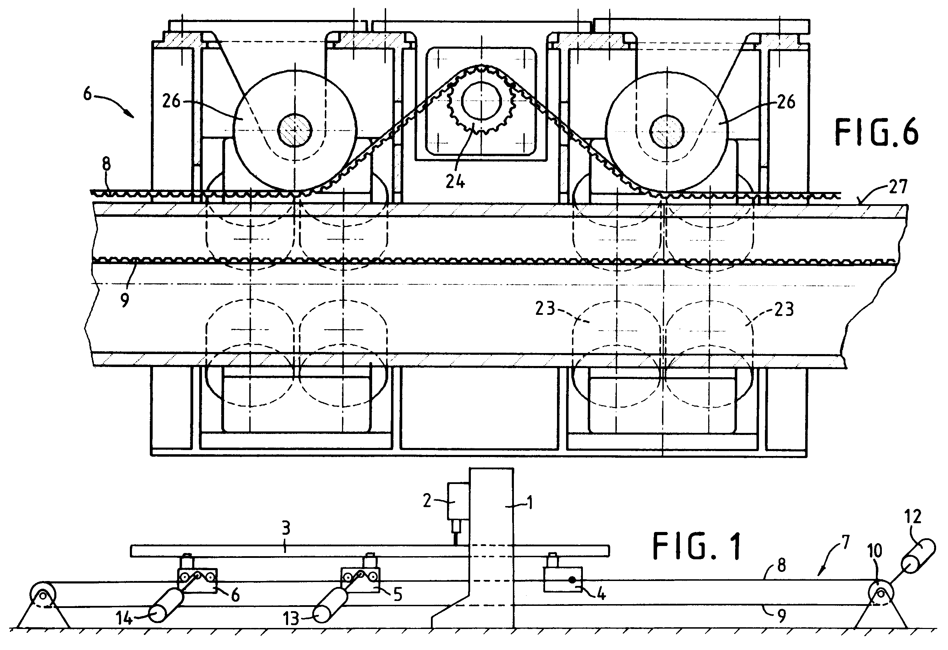

In der schematischen Fig. 1 ist in der Mitte ein Maschinengestell 1 gezeigt, an dem ein Werkzeugschlitten 2 beweglich angeordnet ist. Das Werkzeug ist an einem Balken 3 angesetzt, der unter dem Maschinengestell oder durch dieses hindurch geführt ist, sofern das Gestell als Portal ausgebildet ist. Der Balken 3 wird von drei Spannwagen 4, 5 und 6 getragen, die an einer nicht gezeigten geradlinigen Führungsbahn laufen. Zum Antrieb der Spannwagen dient ein Zugstrang 7, dessen oberes und unteres Trum mit 8 bzw. 9 bezeichnet ist. Der Zugstrang 7 ist an beiden Enden über Umlenkrollen 10 und 11 geführt, die in feststehenden Lagerböcken gelagert sind. Zum Antrieb der Umlenkrolle 10, die je nach dem verwendeten Zugstrang auch eine Walze sein kann, dient ein CNC-gesteuerter Servomotor 12, der seine Signale von der Maschinensteuerung erhält, da die Bewegung des Balkens mit den Werkzeugbewegungen koordiniert ist.

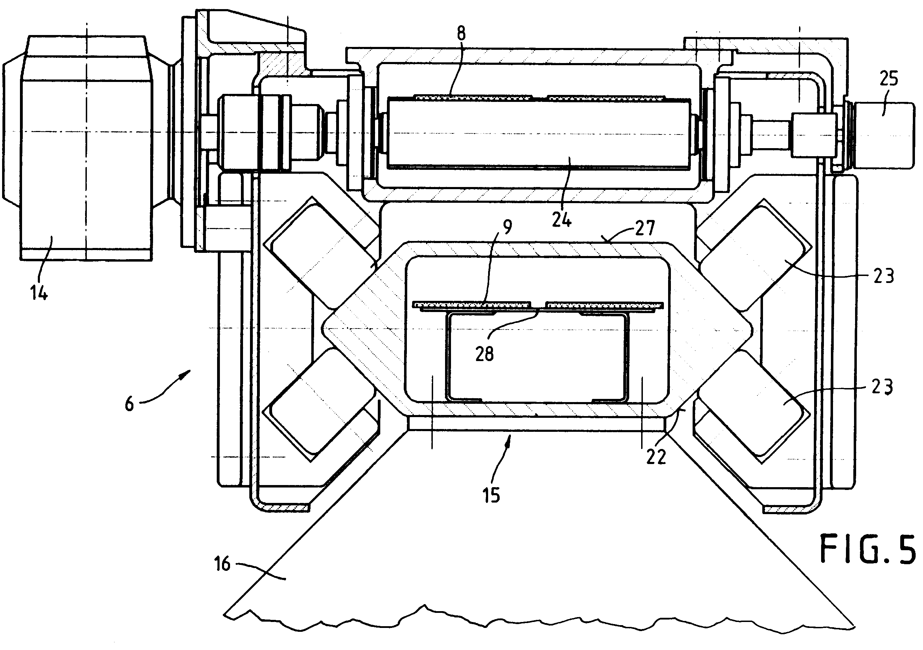

Der Spannwagen 4 ist an dem oberen Trum 8 befestigt, was durch einen schwarzen Punkt schematisch angedeutet ist. Die beiden anderen Spannwagen 5 und 6 haben Kuppelvorrichtungen, die anhand der Figuren 5 und 6 noch näher erläutert werden. Diese beiden Wagen können sich mit Hilfe eigener Motoren 13 und 14 unabhängig an dem Zugstrang entlang bewegen und zwar auch bei aufliegendem Balken 3, sofern die Spannverbindung mit dem Wagen gelockert ist. Somit ist es möglich, die Wagen mit unterschiedlichen Abständen anzuordnen, je nach der Länge des zu bearbeitenden Balkens 3 und der Lage der zu bearbeitenden Stellen am Balken. Allerdings sind an die Genauigkeit der Einstellung der Wagen zueinander nur verhältnismäßig geringe Anforderungen zu stellen, weshalb preisgünstige einfache Motoren verwendet werden können. Während des Bearbeitungsvorganges sind die drei Wagen einerseits durch ihre Verspannung mit dem gemeinsamen Balken und andererseits durch die Ankopplung an den Zugstrang 7 fest miteinander verbunden. Die feste Verbindung zwischen den Wagen 5 und 6 und dem gemeinsamen Trum 8 des Zugstrangs folgt daraus, daß die Motoren 13 und 14 festgebremst sind. Somit nimmt der genau CNC-gesteuerte Zugstrang 7 alle drei Wagen schlupffrei mit und diese Bewegung überträgt sich über die Spannverbindungen auch auf den aufliegenden Balken 3.

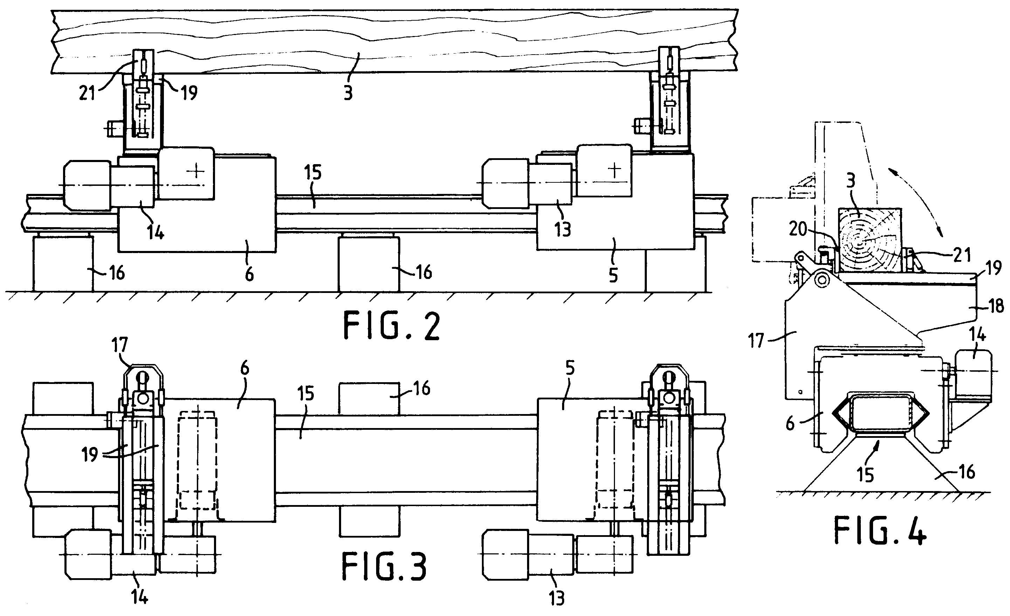

Die Figuren 2 bis 4 führen zur konkreten Bauform eines Spannwagens hin, denn sie geben auch eine Vorstellung von den aufgebauten Spannanordnungen. Die Spannwagen selbst sind wie in Fig. 1 mit 5 und 6 bezeichnet. Ihre Motoren tragen die entsprechenden Bezugszeichen 13 und 14. Es handelt sich um sogenannte Getriebebremsmotoren, deren Welle im Stillstand immer festgebremst ist. Die Wagen laufen an einer Führungsbahn 15, die aus einem Kastenprofilrohr mit seitlich angesetzten prismatischen Laufschienen besteht. Sie ist auf in Abständen angeordneten Stützen 16 befestigt. Die Spannanordnungen bestehen je aus einem Basisgestell 17 und einem an diesem schwenkbar gelagerten Spannarm 18. Dieser hat oben zwei Auflageleisten 19, an denen der Balken 3 mittels eines Anschlags 20 und eines Spannelementes 21 festgespannt ist. Die Schwenklage des Spannarms ist strichpunktiert angedeutet.

Die Figuren 5 und 6 zeigen die Einzelheiten eines Spannwagens. Die auch hier noch schematisierte Führungsbahn 15 ist in Wirklichkeit eine Schweißkontruktion aus mehreren Profilschienen. Der Wagen hat für jede der vier Laufflächen 22 zwei Paar Laufrollen 23, also insgesamt sechzehn Laufrollen, die aus einem abriebfesten Kunststoff bestehen oder mit einem solchen belegt sind. Als Zugstrang dient ein aus zwei Zahnriemen bestehender Doppelzahnriemen, dessen oberes und unteres Trum mit 8' bzw. 9' bezeichnet sind. Die Zähne weisen nach innen. Die Umlenkung an den Enden der Führungsbahn erfolgt über Zahnwellen anstelle der in Fig. 1 schematisch gezeigten Umlenkrollen 10 und 11. Etwa in der Mitte des Wagenkastens ist eine Zahnwelle 24 quer gelagert. Sie ist an dem Motor 14 angekuppelt und trägt an ihrem freien Wellenende (Fig. 5) einen Geber 25 zur Erfassung des bezüglich des Zahnriemens zurückgelegten Weges. Um einen größeren Umschlingungswinkel zu erhalten, drücken zwei zu der Zahnwelle 24 parallel gelagerte Walzen 26 den Zahnriemen nach unten, so daß er auf der Oberfläche 27 des Kastenprofils der Führungsbahn aufliegt. Das andere Trum 9' läuft durch dieses Kastenprofil und liegt in diesem auf einer eigens vorgesehenen Riemenauflage 28 auf (Fig. 5). Entsprechend der reiterartigen Anordnung des Wagens auf der Führungsbahn ist das Wagengehäuse unten geöffnet und an den Stirnseiten entsprechend dem Querschnitt der Führungsbahn und der Stützen 16 ausgeschnitten. Oben ist eine ebene Montagefläche für die Aufspannanordnung vorgesehen.
- 1: Maschinengestell
- 2: Werkzeugschlitten
- 3: Balken
- 4: Spannwagen, fest
- 5: Spannwagen
- 6: Spannwagen
- 7: Zugstrang
- 8: oberes Trum
- 8': oberes Trum des Zahnriemens
- 9: unteres Trum
- 9': unteres Trum des Zahnriemens
- 10: Umlenkrolle
- 11: Umlenkrolle
- 12: Servomotor
- 13: Motor
- 14: Motor
- 15: Führungsbahn
- 16: Stütze
- 17: Basisgestell
- 18: Spannarm
- 19: Auflageleiste
- 20: Anschlag
- 21: Spannelement
- 22: Lauffläche
- 23: Laufrolle
- 24: Zahnwelle
- 25: Geber
- 26: Walze
- 27: Oberfläche
- 28: Riemenauflage

## Patentansprüche

1. Vorrichtung zur Führung der Werkstücke bei einer automatischen Holzbearbeitungsmaschine, insbesondere zur Bearbeitung von Kanthölzern für Bauzwecke, mit mehreren an einer geradlinigen Führungsbahn (15) beweglichen Spannwagen (4, 5, 6), die gemeinsam eine Unterlage für das Werkstück bilden und je eine Spannvorrichtung zum Aufspannen des Werkstücke aufweisen, dadurch gekennzeichnet, daß ein sich längs der Führungsbahn (15) erstreckender endloser Zugstrang (7) vorgesehen ist, der mittels zweier an den Enden der Führungsbahn gelagerter Rollen (10, 11) umgelenkt und von einem CNC-gesteuerten Servomotor (12) angetrieben wird, daß ein erster Spannwagen (4) an einem Trum (8) des Zugstranges befestigt ist, daß dieses Trum (8) über je eine Kuppelvorrichtung (24, 26) der anderen Spannwagen (5, 6) geführt ist und daß diese anderen Spannwagen mittels ihrer Kuppelvorrichtungen in beliebigem Abstand voneinander und von dem ersten Spannwagen (4) mit dem Zugstrang (7) verbindbar sind.

2. Vorrichtung nach Anspruch 1, dadurch gekennzeichnet, daß der Zugstrang eine Kette oder ein Zahnriemen ist und die Kuppelvorrichtung ein an dem betreffenden Spannwagen gelagertes und mit der Kette oder dem Zahnriemen kämmendes gezahntes Antriebselement (24) umfaßt, das mittels eines Motors (14) angetrieben werden kann.

3. Vorrichtung nach Anspruch 1, dadurch gekennzeichnet, daß die Führungsbahn auf freistehenden Stützen (16) am Boden befestigt ist und die Spannwagen (4, 5, 6) von beiden Seiten zugänglich sind.

4. Vorrichtung nach Anspruch 3, dadurch gekennzeichnet, daß die Führungsbahn (15) aus zwei in einem Abstand vom Boden nebeneinander verlaufenden prismatischen Laufschienen besteht, an denen die Spannwagen mit freilaufenden Rollen (23) geführt sind.

5. Vorrichtung nach Anspruch 4, dadurch gekennzeichnet, daß die Laufschienen an einer Hohlprofilschiene angeordnet sind und das andere Trum (9) des Zugstrangs (7) in der Hohlprofilschiene verläuft.

## Claims

1. Device for guiding work pieces in the case of an automatic wood working machine, in particular for working squared timber for building purposes, with several clamping carriages (4, 5, 6) movable on a rectilinear guide track (15), which jointly form a base for the work piece, each having a clamping device for clamping the work piece, characterised in that an endless haulage way (7) extending along the length of the guide track (15) is provided which is deflected by means of two rollers (10, 11) mounted at the ends of the guide track and is driven by a CNC-controlled servomotor (12); that a first clamping carriage (4) is secured to a strand (8) of the haulage way; that this strand (8) is directed over a respective coupling device (24, 26) of the other clamping carriages (5, 6); and that these other clamping carriages may be connected to the haulage way (7) by means of their coupling devices at any desired distance from one another and from the first clamping carriage (4).

2. Device according to Claim 1, characterised in that the haulage way is a chain or a toothed belt, and the coupling device comprises a drive element (24), which meshes with the chain or the toothed belt and is mounted on the respective clamping carriage, and can be driven by means of a motor (14).

3. Device according to Claim 1, characterised in that the guide track is secured on free-standing supports (16) on the ground and the clamping carriages (4, 5, 6) are accessible from both sides.

4. Device according to Claim 3, characterised in that the guide track (15) comprises two vee-guide roller rails running next to one another at a distance from the ground, on which the clamping carriages are guided with free-running rollers (23).

5. Device according to Claim 4, characterised in that the roller rails are arranged on a hollow section rail and the other strand (9) of the haulage way (7) runs in the hollow section rail.

## Revendications

1. Dispositif pour guider des pièces dans une machine automatique pour le travail du bois, en particulier pour travailler des bois équarris dans des buts de construction, comportant plusieurs chariots de serrage (4,5,6) mobiles sur une voie de guidage rectiligne (15), qui forment, ensemble, une base pour la pièce et présentent, chacun, un dispositif de serrage pour serrer la pièce,
caractérisé en ce qu'il est prévu un moyen de traction sans fin (7) s'étendant le long de la voie de guidage (15), lequel est renvoyé au moyen de deux rouleaux (10,11) montés aux extrémités de la voie de guidage et est entraîné par un servomoteur (12) à commande numérique par calculateur, en ce qu'un premier chariot de serrage (4) est fixé sur un brin (8) du moyen de traction, en ce que ce brin (8) est guidé par l'intermédiaire, à chaque fois, d'un dispositif de couplage (24,26) des autres chariots de serrage (5,6), et en ce que ces autres chariots de serrage peuvent être reliés au moyen de traction (7), au moyen de leurs dispositifs de couplage, à un écartement quelconque l'un de l'autre et du premier chariot de serrage (4).

2. Dispositif selon la revendication 1,
caractérisé en ce que le moyen de traction est une chaîne ou une courroie crantée, et le dispositif de couplage comporte un élément d'entraînement denté (24) monté sur le chariot de serrage correspondant et engrenant avec la chaîne ou la courroie crantée, lequel élément peut être entraîné au moyen d'un moteur (14).

3. Dispositif selon la revendication 1,
caractérisé en ce que la voie de guidage est fixée sur des supports isolés (16) sur le sol et les chariots de serrage (4,5,6) sont accessibles des deux côtés.

4. Dispositif selon la revendication 3,
caractérisé en ce que la voie de guidage (15) est constituée de deux rails de roulement prismatiques s'étendant l'un à côté de l'autre à distance du sol, sur lesquels sont guidés les chariots de serrage par des rouleaux (23) à course libre.

5. Dispositif selon la revendication 4,
caractérisé en ce que les rails de roulement sont agencés sur un rail profilé creux, et l'autre brin (9) du moyen de traction (7) s'étend dans le rail profilé creux.
